# EUROPEAN PATENT SPECIFICATION

(11) **EP 1 209 190 B1**
(45) Date of publication and mention of the grant of the patent: **29.03.2006**
(21) Application number: 00937253.3
(22) Date of filing: 15.06.2000
(51) Int. Cl.: C08K 5/527

(54) **NUCLEATING AGENT**
NUKLEIERUNGSMITTEL
AGENT NUCLEANT

(30) Priority: 15.06.1999 JP 16886499
(43) Date of publication of application: 29.05.2002
(73) Proprietor: ASAHI DENKA KOGYO KABUSHIKI KAISHA, Tokyo 116-0012 (JP)
(72) Inventor: TAKAHASHI, Masayuki DI, // (JP); HARUNA, Tohru, Urawa-shi Saitama 336-0022 (JP)
(74) Representative: Benson, John Everett
(86) International application number: PCT/JP2000/003912
(87) International publication number: WO 2000/077086

(56) References cited:
- EP-A2- 0 255 693
- JP-A- 4 270 753
- JP-A- 6 299 014
- JP-A- 8 081 592
- JP-A- 10 053 673
- JP-A- 10 251 458
- JP-A- 11 012 429
- US-A- 4 544 677

## Description

The present invention relates to a nucleating agent consisting of a phosphoric acid ester metal salt, which exhibits excellent handling property and exerts excellent effects of improving transparency and mechanical strength of a resin; and more particularly to a nucleating agent characterized by having a certain average particle size, a certain aspect ratio, and a certain bulk specific gravity which individually fall within specified ranges, the agent exhibiting excellent handling property when incorporated into a resin, and exerting excellent effects of improving transparency and mechanical strength of the resin containing the agent.

Phosphoric acid aromatic ester metal salts are typical nucleating agents used to elevate the crystallization temperature of a crystalline synthetic resin and improving transparency and mechanical strength of the resin. For example, JP-A-6 299 014 describes a syndiotactic polypropylene composition comprising an aromatic organophosphate ester metal salt. Such a phosphoric acid aromatic ester metal salt serving as a nucleating agent is a pillar-shaped crystalline compound. When such an agent is incorporated into a resin, in order to enhance dispersibility of the agent in the resin, the agent is preferably finely pulverized so as to attain a particle size of 10 µm or less. However, since a conventional finely pulverized nucleating agent has a large aspect ratio and a small bulk specific gravity, the nucleating agent is not suitable for automatic weighing. In addition, since the nucleating agent exhibits poor fluidity, the agent has the problem that transfer of the agent through a hopper, etc. is sometimes unsatisfactory.

When a nucleating agent is finely pulverized, the dispersibility of the agent in a resin is enhanced, but the fluidity of the agent is lowered. In contrast, when the particle size of a nucleating agent is increased, the fluidity of the agent is enhanced, but the dispersibility of the agent in a resin is lowered, resulting in poor effects of improving transparency and mechanical strength of the resin. Therefore, there has been demand for a nucleating agent exhibiting excellent fluidity while assuming a fine particulate form.

An object of the present invention is to provide a nucleating agent exhibiting excellent handling property when incorporated into a resin, and exerting excellent effects of improving transparency and mechanical strength of the resin containing the agent.

In view of the foregoing, the present inventors have performed extensive studies, and have found that, when the average particle size, average aspect ratio, and bulk specific gravity of a phosphoric acid aromatic ester metal salt are controlled so as to fall within a specific range, the metal salt exhibits excellent fluidity while assuming a fine particulate form. The present invention has been accomplished on the basis of this finding.

Accordingly, a first invention provides a nucleating agent consisting of a phosphoric acid aromatic ester metal salt having an average major-axis length of 10 µm or less, an average aspect ratio of 10 or less, and a bulk specific gravity of at least 0.1, the metal salt being represented by the following formula (I): 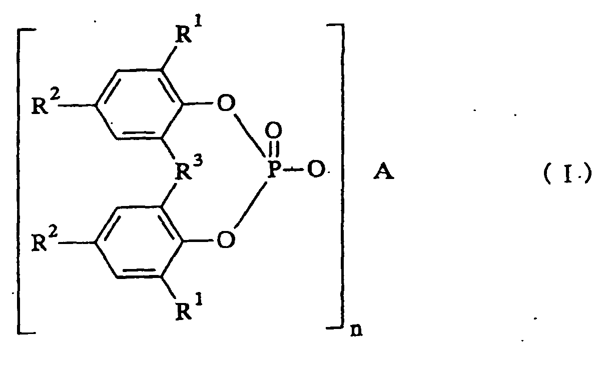 (wherein R¹ represents a C4-C8 alkyl group, R² represents a hydrogen atom or a C1-C8 alkyl group, R³ represents a C1-C4 alkylidene group, A represents a metal having a valence of n, and n is an integer of 1 or 2).

A second invention provides a nucleating agent according to the first invention, wherein the average major-axis length is 5 µm or less.

A third invention provides a nucleating agent according to the first or second invention, wherein the metal represented by A is an alkali metal.

A fourth invention provides a nucleating agent according to any one of the first through third inventions, wherein a compound represented by formula (I) is a compound represented by formula (II).

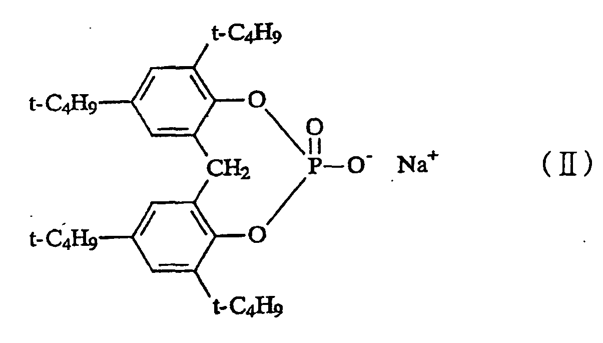

### Best Mode for Carrying Out the Invention

The present invention will next be described in detail.

### (Phosphoric acid aromatic ester metal salt)

Examples of the C4-C8 alkyl group represented by R¹ of formula (I) include butyl, sec-butyl, tert-butyl, pentyl, tert-pentyl, hexyl, cyclohexyl, heptyl, octyl, isooctyl, and tert-octyl.

Examples of the C1-C8 alkyl group represented by R² include methyl, ethyl, propyl, isopropyl, butyl, sec-butyl, tert-butyl, pentyl, tert-pentyl, hexyl, cyclohexyl, heptyl, octyl, isooctyl, and tert-octyl.

Examples of the C1-C4 alkylidene group represented by R³ include methylene, ethylidene, propylidene, and butylidene.

Examples of the metal represented by A include alkali metals such as lithium, sodium, and potassium; alkaline earth metals such as magnesium and calcium; and zinc. An alkali metal is preferred, since the resultant salt exerts excellent effects as a nucleating agent.

The phosphoric acid aromatic ester metal salt of the present invention having a certain average major-axis length, certain average aspect ratio, and certain bulk specific gravity which individually fall within specified ranges can be produced by pulverizing a phosphoric acid aromatic ester metal salt synthesized through a conventionally known method by use of a pulverization apparatus such as a ball mill, a Henschel mixer, or a kneader.

Specific examples of the compound represented by formula (I) include the following compounds Nos. 1 through 5. However, the present invention is not limited to the following compounds.

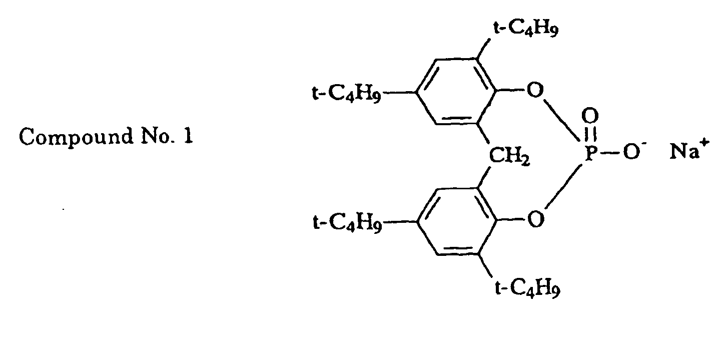

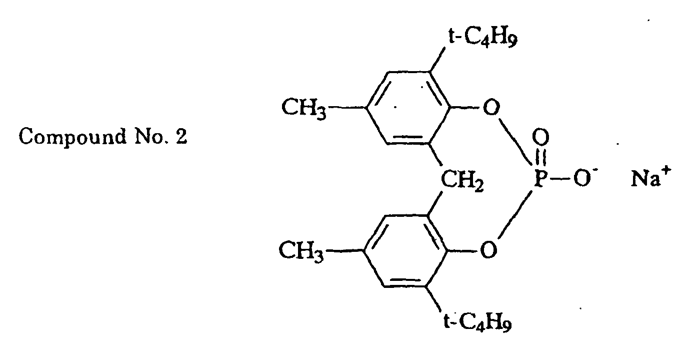

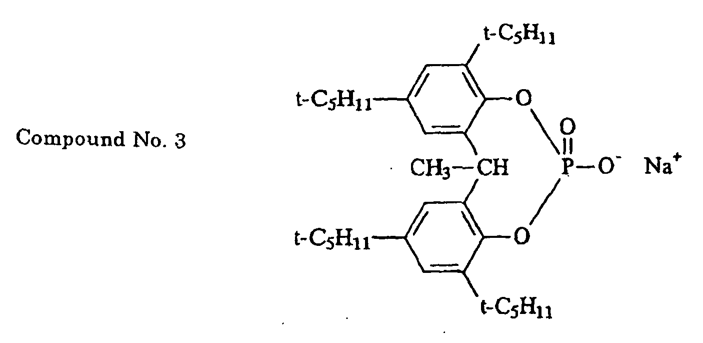

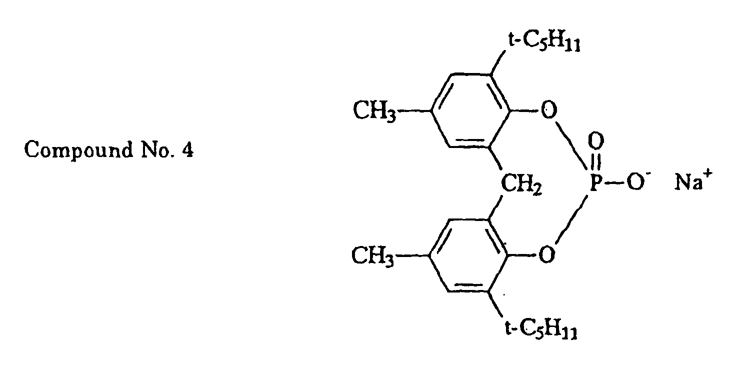

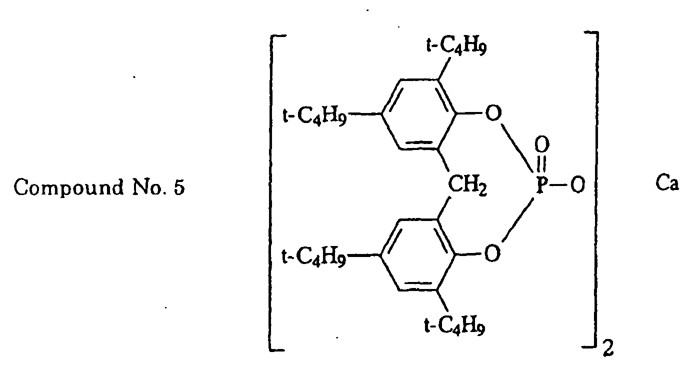

Of these, compound No. 1 is preferred, since it exerts prominently excellent effects as a nucleating agent.

The compound of the present invention is preferably a needle-like crystalline compound, and it preferably has an average major-axis length of 10 µm or less, particularly preferably 5 µm or less, from the viewpoint of excellent dispersibility.

As described above, no particular limitation is imposed on the method for synthesizing the phosphoric acid aromatic ester metal salt represented by the aforementioned formula (I), and the metal salt is synthesized through a known method. The nucleating agent of the present invention having a certain average particle size, a certain average aspect ratio, and a certain bulk specific gravity which individually fall within specified ranges is produced by pulverizing the metal salt for a predetermined period of time, by means of a combination of pulverization methods or a specific pulverization method.

The phosphoric acid aromatic ester metal salt used in the present invention is preferably finely pulverized so as to attain an average major-axis length of 10 µm or less, in order to ensure enhanced dispersibility of the metal salt in a resin when the salt is incorporated into the resin. From the viewpoint of dispersibility, the average major-axis length is more preferably 5 µm or less. The lower limit of the average major-axis length is not particularly limited, but in consideration of costs required for pulverization and lowering of fluidity, the average major-axis length is preferably 0.1 µm or more. When the average major-axis length of the metal salt exceeds 10 µm, the fluidity of the salt is enhanced, with the sacrifice of dispersibility being lowered as described above, resulting in lowering of the effects of the salt (i.e., a nucleating agent) of improving transparency and mechanical strength of a resin containing the salt, which is not preferable. When the aspect ratio of the metal salt exceeds 10, mechanical properties of a resin composition obtained through addition of the salt to a synthetic resin tend to deteriorate, which is not preferable. When the bulk specific gravity of the metal salt is less than 0.1, the salt is not suitable for automatic weighing. In addition, since the salt exhibits poor fluidity, the salt involves a problem that the salt is not easily added, through a hopper, etc., to a resin.

Specific examples of the pulverization apparatus used for producing the nucleating agent of the present invention include compression pulverization apparatuses such as a brake crusher, a dodge crusher, a single toggle jaw crusher, a gyratory crusher, a cone crusher, a hydro cone crusher, a roll crusher, a single'roll crusher, and a disk crusher; impact-compression pulverization apparatuses such as a stamp mill, a hammer mill, an impeller breaker, an impact crusher, a Raymond vertical mill, a disintegrator, a dismembrater, a titanium mill, a novorotor, a micron mill, a jet mill, a jet pulverizer, a micronizer, a reductionizer, a jet pulverization apparatus, an air mill, a ball mill, a tube mill, a rod mill, a conical mill, a tricone mill, and a Hildebrand mil; shear pulverization apparatuses such as a cutting mill, a rotary crusher, and a shear roll mill; and friction pulverization apparatuses such as a hand mill, a pan mill, an attrition mill, an edge runner, a sand grinder, a screw crusher, a pillar-shaped attrition mill, a centrifugal roller mill, a centrifugal ball mill, a ring roller mill, a high-speed ball mill, a low-speed ball mill, a high-swing ball mill, a premier mill, and a Schalotte mill. Particularly, combined use of two or more different types of pulverization apparatuses is preferred.

As described below in Examples and Comparative Examples, powder of particles having a small average major-axis length and a large average aspect ratio or powder of particles having a small average major-axis length and a small average aspect ratio is obtained by appropriately selecting a specific pulverization method and a certain pulverization time, or by means of a combination of pulverization methods and times.

Examples of crystalline synthetic resins into which the nucleating agent of the present invention is to be incorporated include α-olefin polymers such as polypropylene, high density polyethylene, low density polyethylene, linear-chain low density polyethylene, polybutene-1, poly(3-methylpentene), poly(4-methylpentene), and ethylene/propylene block or random copolymers; thermoplastic linear-chain polyesters such as polyethylene terephthalate, polybutylene terephthalate, and polyhexamethylene terephthalate; polyphenylene sulfide; polycaprolactone; and linear-chain polyamides such as polyhexamethylene adipamide.

The amount of the nucleating agent of the present invention to be incorporated into a crystalline synthetic resin varies in accordance with the type of the resin. The amount of incorporation is typically 0.001-10 parts by weight, preferably 0.01-5 parts by weight, on the basis of 100 parts by weight of the resin.

When the nucleating agent of the present invention is incorporated into, for example, α-olefin polymer of the aforementioned resins, the effects of the nucleating agent vary in accordance with the density, softening point, melt flow rate, and molecular weight distribution of the polymer; the percentage of components of the polymer which are insoluble in a solvent; the degree of stereospecificity of the polymer; the type of a polymerization catalyst; whether or not the catalyst residue is treated; and the type of olefins serving as raw materials and the compositional proportions thereof. However, the nucleating agent of the present invention is much or less effective for any of the aforementioned resins. Examples of the resin into which the nucleating agent is to be incorporated include resins and resin compositions described in Japanese Patent Application Laid-Open (*kokai*) Nos. 63-37148, 63-37152, 63-90552, 63-210152, 63-213547, 63-243150, 63-243152, 63-260943, 63-260944, 63-264650, 1-178541, 2-49047, 2-102242, 2-251548, 2-279746, 3-195751, 7-118466, 7-118486, 7-133380, 7-138421, 7-173302, 7-173317, 7-173341, 7-179684, 7-179691, 7-195592, 7-238204, 7-242776, 7-268143, 7-286089, 8-27335, 8-34885, 8-59920, 8-59921, 8-73671, 8-81589, 8-81595, 8-134293, 8-269266, 8-291236, 8-311272, 8-311295, 8-231788, 9-3274, 9-3293, 9-12805, 9-20840, 9-59443, 9-59455, and 9-67501.

If necessary, the nucleating agent is preferably used in combination with, for example, an antioxidant such as a phenolic antioxidant, a phosphorus-containing antioxidant, or a thioether-containing antioxidant, a UV absorber, a hindered amine photo-stabilizer, another nucleating agent, an antistatic agent, a filler, a flame retardant, or a lubricant.

Examples of the aforementioned phenolic antioxidant include 2,6-di-tert-butyl-p-cresol, 2,6-diphenyl-4-octadecyloxyphenol, distearyl (3,5-di-tert-butyl-4-hydroxybenzyl)phosphonate, 1,6-hexamethylenebis[(3,5-di-tert-butyl-4-hydroxyphenyl)propionic acid amide], 4,4'-thiobis(6-tert-butyl-m-cresol), 2,2'-methylenebis(4-methyl-6-tertbutylphenol), 2,2'-methylenebis(4-ethyl-6-tert-butylphenol), 4,4'-butylidenebis(6-tert-butyl-m-cresol), 2,2'-ethylidenebis(4,6-di-tert-butylphenol), 2,2'-ethylidenebis(4-sec-butyl-6-tert-butylphenol), 1,1,3-tris(2-methyl-4-hydroxy-5-tert-butylphenyl)butane, 1,3,5-tris(2,6-dimethyl-3-hydroxy-4-tert-butylbenzyl) isocyanurate, 1,3,5-tris(3,5-di-tert-butyl-4-hydroxybenzyl) isocyanurate, 1,3,5-tris(3,5-di-tert-butyl-4-hydroxybenzyl)-2,4,6-trimethylbenzene, 2-tert-butyl-4-methyl-6-(2-acryloyloxy-3-tert-butyl-5-methylbenzyl)phenol, stearyl (3,5-di-tert-butyl-4-hydroxyphenyl) propionate, thiodiethylene glycol bis[(3,5-di-tert-butyl-4-hydroxyphenyl)propionate], 1,6-hexamethylenebis[(3,5-di-tert-butyl-4-hydroxyphenyl)propionate], a bis[3,3-bis(4-hydroxy-3-tert-butylphenyl)butyric acid] glycol ester, bis[2-tert-butyl-4-methyl-6-(2-hydroxy-3-tert-butyl-5-methylbenzyl)phenyl] terephthalate, 1,3,5-tris[(3,5-di-tert-butyl-9-hydroxyphenyl)propionyloxyethyl] isocyanurate, tetrakis[methyl 3-(3,5-di-tert-butyl-4-hydroxyphenyl)propionate]methane, 3,9-bis[1,1-dimethyl-2-{(3-tert-butyl-4-hydroxy-5-methylphenyl)propionyloxy}ethyl]-2,4,8,10-tetraoxaspiro[5.5]undecane, and triethylene glycol bis[(3-tert-butyl-4-hydroxy-5-methylphenyl)propionate]. The phenolic antioxidant is incorporated into a resin in an amount of 0.001-10 parts by weight, preferably 0.05-5 parts by weight, on the basis of 100 parts by weight of the resin.

Examples of the aforementioned phosphorus-containing antioxidant include tris(nonylphenyl) phosphite, tris(2,4-di-tert-butylphenyl) phosphite, tris[2-tert-butyl-4-(3-tert-butyl-4-hydroxy-5-methylphenylthio)-5-methylphenyl] phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetra(tridecyl)isopropylidenediphenol diphosphite, tetra(tridecyl)-4,4'-n-butylidenebis(2-tert-butyl-5-methylphenol) diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, 2,2'-methylenebis(4,6-tert-butylphenyl)-2-ethylhexyl phosphite, 2,2'-methylenebis(4,6-tert-butylphenyl)octadecyl phosphite, 2,2'-ethylidenebis(4,6-di-tert-butylphenyl) fluorophosphite, tris(2-[(2,4,8,10-tetrakis(tert-butyl)dibenzo[d,f][1,3,2]dioxaphosphebine-6-yl)oxylethyl)amine, and a phosphite of 2-ethyl-2-butylpropylene glycol and 2,4,6-tri-tert-butyl phenol.

Examples of the thioether-containing antioxidant include dialkyl thiodipropionates such as dilauryl thiodipropionate, dimyristyl thiodipropionate, and distearyl thiodipropionate; and β-alkylmercaptopropionic acid esters of polyol such as pentaerythritol tetra(β-dodecylmercaptopropionate).

Examples of the UV absorber include 2-hydroxybenzophenones such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); 2-(2'-hydroxyphenyl)benzotriazoles such as 2-(2'-hydroxy-5'-methylphenyl)benzotriazole, 2-(2'-hydroxy-3'.5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)benzotriazole, 2-(2'-hydroxy-3',5'-dicumylphenyl)benzotriazole, 2,2'-methylenebis(4-tert-octyl-6-benzotriazolyl)phenol, and 2-(2'-hydroxy-3'-tert-butyl-5'-carboxyphenyl)benzotriazole; benzoates such as phenyl salicylate, resorcinol monobenzoate, 2,4-di-tert-butylphenyl 3,5-di-tert-butyl-4-hydroxybenzoate, 2,4-di-tert-amylphenyl 3,5-di-tert-butyl-4-hydroxybenzoate, and hexadecyl 3,5-di-tert-butyl-4-hydroxybenzoate; substituted oxanilides such as 2-ethyl-2'-ethoxyoxanilide and 2-ethoxy-4'-dodecyloxanilide; cyanoacrylates such as ethyl α-cyano-β,β-diphenylacrylate and methyl 2-cyano-3-methyl-3-(p-methoxyphenyl)acrylate; and triaryltriazines such as 2-(2-hydroxy-4-octoxyphenyl)-4,6-bis(2,4-di-tert-butylphenyl)-s-triazine, 2-(2-hydroxy-4-methoxyphenyl)-4.6-diphenyl-s-triazine, and 2-(2-hydroxy-4-propoxy-5-methylphenyl)-4,6-bis(2,4-di-tert-butylphenyl)-s-triazine.

Examples of the hindered amine photo-stabilizer include hindered amine compounds such as 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl) sebacate, bis(1,2,2,6,6-pentamethyl-4-piperidyl) sebacate, tetrakis(2,2,6,6-tetramethyl-4-piperidyl) butanetetracarboxylate, tetrakis(1,2,2,6,6-pentamethyl-4-piperidyl) butanetetracarboxylate, bis(2,2,6,6-tetramethyl-4-piperidyl) di(tridecyl)-1,2,3,4-butanetetracarboxylate, bis(1,2,2,6,6-pentamethyl-4-piperidyl) di(tridecyl)-1,2,3,4-butanetetracarboxylate, bis(1,2,2,6.6-pentamethyl-4-piperidyl)-2-butyl-2-(3,5-di-tert-butyl-4-hydroxybenzyl) malonate, 1-(2-hydroxyethyl)-2,2,6,6-tetramethyl-4-piperidinol/diethyl succinate polycondensates, 1,6-bis(2,2,6,6-tetramethyl-4-piperidylamino)hexane/dibromoethane polycondensates, 1,6-bis(2,2,6,6-tetramethyl-4-piperidylamino)hexane/2,4-dichloro-6-morpholino-s-triazine polycondensates, 1,6-bis(2,2,6.6-tetramethyl-4-piperidylamino)hexane/2,4-dichloro-6-tert-octylamino-s-triazine polycondensates, 1.5,8.12-tetrakis[2,4-bis(N-butyl-N-(2,2,6,6-tetramethyl-4-piperidyl)amino)-s-triazin-6-yl]-1,5,8,12-tetraazadodecane, 1,5,8,12-tetrakis[2,4-bis(N-butyl-N-(1,2.2,6,6-pentamethyl-4-piperidyl)amino)-s-triazin-6-yl]-1,5,8,12-tetraazadodecane, 1,6,11-tris[2,4-bis(N-butyl-N-(2,2,6,6-tetramethyl-4-piperidyl)amino)-s-triazin-6-yl]aminoundecane, and 1,6,11-tris[2,4-bis(N-butyl-N-(1,2,2,6,6-pentamethyl-4-piperidyl)amino)-s-triazin-6-yl]aminoundecane.

Examples of other nucleating agents include metal salts of benzoic acid such as aluminum p-tert-butylbenzoate and lithium p-tert-butylbenzoate: benzylidene sorbitols such as dibenzylidene sorbitol, bis(4-methylbenzylidene) sorbitol, bis(4-ethylbenzylidene) sorbitol, and bis(dimethylbenzylidene) sarbitol; metallic alcoholates such as zinc glyceride; and amino acid metal salts such as zinc glutamate.

The amount of any of such additives incorporated into a resin is equal to that of the aforementioned phenolic antioxidant.

A synthetic resin composition containing the nucleating agent of the present invention can be used in a variety of fields including construction materials, agricultural materials, automobile parts, packaging materials, sundries, toys, and electric appliances, in accordance with properties of the synthetic resin contained in the composition.

The present invention will next be described in more detail by way of Examples, which should not be construed as limiting the invention thereto.

### (Synthesis of Compound No. 1)

2,2'-Methylenebis(4,6-di-t-butylphenyl) phosphate (1,458 g, 3 mol), sodium hydroxide (120 g, 3 mol) in water (300 g), and methanol (292 g) were added to a kneader, and the resultant mixture was kneaded at room temperature for one hour. The resultant product was dried under vacuum, and then pulverized, to thereby yield white powdery compound No. 1 (1,264 g). The thus-yielded powdery compound No. 1 had an average major-axis length (hereinafter the length will be simply referred to as "average particle size") of 27 µm, an average aspect ratio of 16, and a bulk specific gravity of 0.08. The powder (hereinafter called "raw material powder A") was subjected to the below-described pulverization test.

### (Pulverization test)

Raw material powder A was pulverized by use of a pulverization apparatus shown in Table-1 for 30 minutes or three hours, and the average particle size, aspect ratio, and bulk specific gravity of the pulverized product were measured. Furthermore, in order to confirm the effect of combination of pulverization methods, raw material powder A was pulverized by means of two different pulverization methods (for 30 minutes each); or raw material powder A was pulverized by means of one of the two methods for 30 minutes and then by means of the other method for two hours and 30 minutes. In respective cases, the average particle size, aspect ratio, and bulk specific gravity of the pulverized product were measured. The results are shown in Table-1. The pulverization methods are as follows: method 1: pulverization by use of a jet mill, method 2: pulverization by use of a ball mill.

The average particle size and the bulk specific gravity (bulk density) were measured in accordance with JIS R1600. The average particle size was measured through laser diffraction scattering by use of "SK laser micron sizer" (product of Seishin Enterprise Co., Ltd.). The average aspect ratio was obtained as follows: the lengths of the major axes and minor axes of randomly chosen 100 crystals were measured from a micrograph of the above-pulverized powder, and the average of the ratio of the major axis lengths to the minor axis lengths was obtained.

**Table-1**

| | Pulverization method | | | | Average particle size | Avarage Aspect ratio | Bulk specific gravity |
|---|---|---|---|---|---|---|---|
| | Method | Time | Method | Time | µm | | g/cm³ |
| Comp. Ex . 1 | 1 | 0.5 | - | | 3.2 | 26 | 0.06 |
| Comp. Ex. 2 | 1 | 3.0 | - | | 1.8 | 23 | 0.08 |
| Comp. Ex. 3 | 2 | 0.5 | - | | 2.5 | 15 | 0.12 |
| Ex. 1 | 2 | 3.0 | - | | 1.7 | 7 | 0.15 |
| Ex. 2 | 1 | 0.5 | 2 | 0.5 | 1.8 | 9 | 0.13 |
| Ex. 3 | 1 | 0.5 | 2 | 2.5 | 0.3 | 2 | 0.25 |
| Ex. 4 | 2 | 0.5 | 1 | 2.5 | 0.6 | 6 | 0.19 |

The results of Comparative Examples 1 and 2, Example 1, and Comparative Example 3 show that, when pulverization time is lengthened, the average particle size is reduced regardless of the pulverization method, and that the average aspect ratio is considerably reduced or slightly reduced in accordance with the pulverization method employed, even when pulverization time is lengthened. Accordingly, when pulverization is carried out by means of an appropriately selected method for a long period of time, powder having a small aspect ratio can be obtained. The results of Examples 2 and 3 show that, when pulverization methods are carried out in combination, powder having a small average aspect ratio can be obtained effectively.

Effects of the nucleating agent of the present invention when incorporated into a resin will next be described by way of Reference Examples, which should not be construed as limiting the invention thereto.

### (Reference Example 1)

Polypropylene (weight-average molecular weight: 456,000) (100 parts by weight), calcium stearate (0.05 parts by weight), tetrakis[methyl 3-(3,5-di-tert-butyl-4-hydroxyphenyl)propionate]methane (0.1 parts by weight), and a nucleating agent (shown in Table-2) (0.1 parts by weight) were blended by use of a Henschel mixer, and the resultant mixture was extruded at 250°C, to thereby form pellets. The resultant pellets were subjected to injection molding at 230°C, to thereby produce sheet-like test pieces. The haze and flexural modulus (MPa) of the thus-produced test piece were measured in accordance with ASTM D-1003-61 and ASTM D-790, respectively. The results are shown in Table-2.

**Table-2**

| Reference Example | Nucleating agent | Haze | Flexural modulus |
|---|---|---|---|
| | | | MPa |
| 1-1 | Example-1 | 15 | 1880 |
| 1-2 | Example-2 | 14 | 1880 |
| 1-3 | Example-3 | 12 | 1900 |
| 1-4 | Example-4 | 13 | 1890 |

| Comparative Reference Example | | | |
|---|---|---|---|
| 1-1 | Comp. Example-1 | 20 | 1730 |
| 1-2 | Comp. Example-2 | 21 | 1760 |
| 1-3 | Comp. Example-3 | 23 | 1750 |

### (Reference Example 2)

An ethylene-propylene random polymer (weight average molecular weight: 356,000) (ethylene content: 7 mol%) (100 parts by weight), calcium stearate (0.05 parts by weight), tetrakis[methyl 3- (3,5-di-tert-butyl-4-hydroxyphenyl)propionate]methane (0.1 parts by weight), and a nucleating agent (shown in Table-3) (0.1 parts by weight) were blended by use of a Henschel mixer, and the resultant mixture was extruded at 250°C. to thereby form pellets. The resultant pellets were subjected to injection molding at 230°C. to thereby produce sheet-like test pieces. The haze and flexural modulus (MPa) of the thus-produced test piece were measured in accordance with ASTM D-1003-61 and ASTM D-790, respectively. The results are shown in Table-3.

**Table-3**

| Reference Example | Nucleating agent | Haze | Flexural modulus |
|---|---|---|---|
| | | | MPa |
| 2-1 | Example-1 | 12 | 1120 |
| 2-2 | Example-2 | 12 | 1130 |
| 2-3 | Example-3 | 9 | 1150 |
| 2-4 | Example-4 | 10 | 1140 |

| Comparative Reference Example | | | |
|---|---|---|---|
| 2-1 | Comp. Example-1 | 18 | 1050 |
| 2-2 | Comp. Example-2 | 16 | 1040 |
| 2-3 | Comp. Example-3 | 17 | 1030 |

### (Reference Example 3)

An ethylene-propylene block polymer (weight average molecular weight: 323,000) (ethylene content: 10 wt.%) (100 parts by weight), calcium stearate (0.05 parts by weight), tetrakis[methyl 3-(3,5-di-tert-butyl-4-hydroxyphenyl)propionate]methane (0.1 parts by weight), and a nucleating agent (shown in Table-4) (0.1 parts by weight) were blended by use of a Henschel mixer, and the resultant mixture was extruded at 250°C, to thereby form pellets. The resultant pellets were subjected to injection molding at 230°C, to thereby produce sheet-like test pieces. The haze and flexural modulus (MPa) of the thus-produced test piece were measured in accordance with ASTM D-1003-61 and ASTM D-790, respectively. The results are shown in Table-4.

**Table-4**

| Reference Example | Nucleating agent | Haze | Flexural modulus |
|---|---|---|---|
| | | | MPa |
| 3-1 | Example-1 | 79 | 1400 |
| 3-2 | Example-2 | 79 | 1390 |
| 3-3 | Example-3 | 78 | 1410 |
| 3-4 | Example-4 | 78 | 1420 |

| Comparative Reference Example | | | |
|---|---|---|---|
| 3-1 | Comp. Example-1 | 82 | 1280 |
| 3-2 | Comp. Example-2 | 80 | 1280 |
| 3-3 | Comp. Example-3 | 80 | 1270 |

### Industrial Applicability

When a phosphoric acid aromatic ester metal salt nucleating agent is pulverized so as to attain an average major-axis length of 10 µm or less, an average aspect ratio of 10 or less, and a bulk specific gravity of at least 0.1, the resultant nucleating agent exhibits excellent handling property (i.e., chargeability), suppresses generation of dust, and exerts excellent effects of improving properties of a crystalline synthetic resin when incorporated into the resin.

## Claims

1. A nucleating agent consisting of a phosphoric acid aromatic ester metal salt having an average major-axis length of 10 µm or less, an average aspect ratio of 10 or less, and a bulk specific gravity of at least 0.1, the metal salt being represented by the following formula (I): 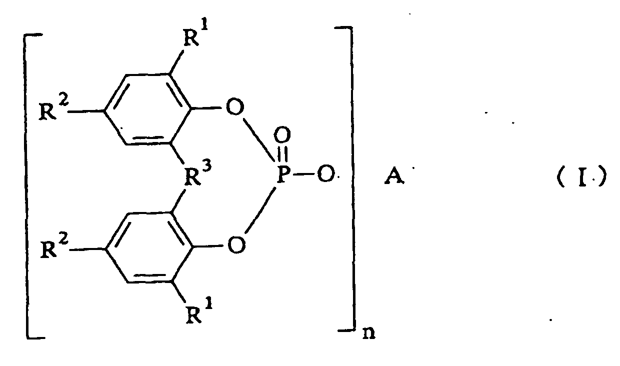 (wherein R¹ represents a C4-C8 alkyl group, R² represents a hydrogen atom or a C1-C8 alkyl group, R³ represents a C1-C4 alkylidene group, A represents a metal having a valence of n, and n is an integer of 1 or 2) .

2. The nucleating agent according claim 1, wherein the average major-axis length is 5 µm or less.

3. The nucleating agent according to claim 1 or 2, wherein the metal represented by A is an alkali metal.

4. The nucleating agent according to any one of claims 1 through 3, wherein the compound represented by formula (I) is a compound represented by formula (II).

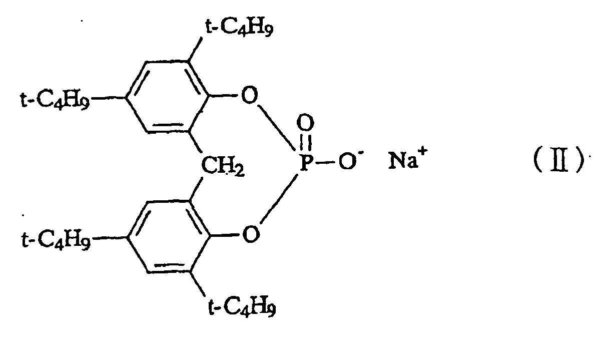

## Patentansprüche

1. Nukleierungsmittel, bestehend aus einem Metallsalz eines aromatischen Phosphorsäureesters mit einer mittleren Hauptachsenlänge von 10 µm oder weniger, einem mittleren Seitenverhältnis von 10 oder weniger und einer massenspezifischen Schwerkraft von mindestens 0,1, welches Metallsalz dargestellt ist durch die folgende Formel (I): 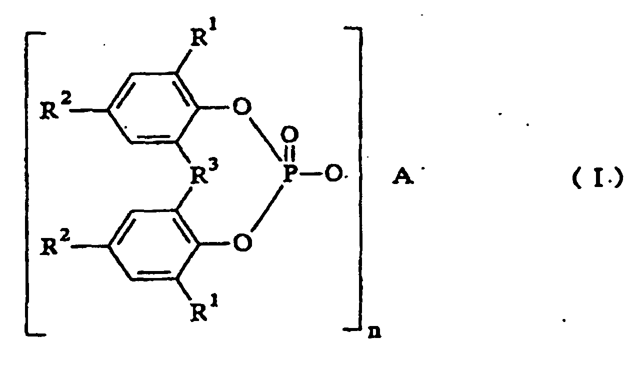 (worin R¹ für eine C4-C8-Alkylgruppe steht, R² für ein Wasserstoffatom oder eine C1-C8-Alklygruppe steht, R³ für eine C1-C4-Alkylidengruppe steht, A für ein Metall mit einer Wertigkeit von n steht, und n eine ganze Zahl von 1 oder 2 ist).

2. Nukleierungsmittel nach Anspruch 1, worin die mittlere Hauptachsenlänge 5 µm oder weniger beträgt.

3. Nukleierungsmittel nach Anspruch 1 oder 2, worin das durch A dargestellte Metall ein Alkalimetall ist.

4. Nukleierungsmittel nach einem der Ansprüche 1 bis 3, worin die durch Formel (I) dargestellte Verbindung eine Verbindung ist, wie durch Formel (II) dargestellt:

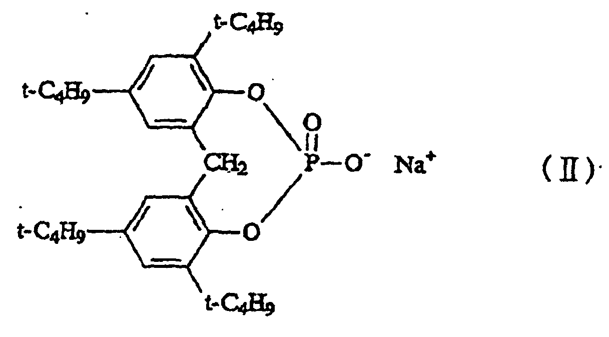

## Revendications

1. Agent de nucléation constitué d'un sel métallique ester aromatique de l'acide phosphorique ayant une longueur moyenne de l'axe principal de 10 µm ou moins, un rapport d'aspect moyen de 10 ou moins, et une densité apparente d'au moins 0,1, le sel métallique étant représenté par la formule (I) suivante : 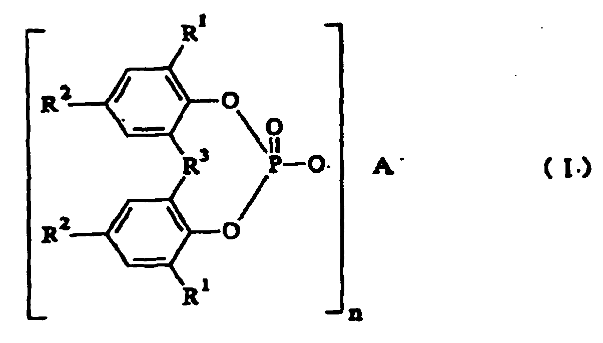 (dans laquelle R¹ représente un groupe alkyle en C₄ à C₈, R² représente un atome d'hydrogène ou un groupe alkyle en C₁ à C₈, R³ représente un groupe alkylidène en C₁ à C₄, A représente un métal ayant une valence de n, et n est un entier de 1 ou 2).

2. Agent de nucléation selon la revendication 1, dans lequel la longueur moyenne de l'axe principal est de 5 µm ou moins.

3. Agent de nucléation selon la revendication 1 ou 2, dans lequel le métal représenté par A est un métal alcalin.

4. Agent de nucléation selon l'une quelconque des revendications 1 à 3, dans lequel le composé représenté par la formule (I) est un composé représenté par la formule (II) :
